# EUROPEAN PATENT APPLICATION

(11) **EP 4 661 410 A1**
(43) Date of publication of application: **10.12.2025**
(21) Application number: 24749633.4
(22) Date of filing: 26.01.2024
(51) Int. Cl.: H04N 21/472

(54) **VIDEO PROCESSING METHOD, APPARATUS AND DEVICE, AND STORAGE MEDIUM**

(30) Priority: 01.02.2023 CN 202310116029
(71) Applicant: Beijing Zitiao Network Technology Co., Ltd., Beijing 100190 (CN)
(72) Inventor: JIANG, Jiaxin, Beijing 100028 (CN); LI, Ke, Beijing 100028 (CN)
(74) Representative: Grünecker Patent- und Rechtsanwälte PartG mbB
(86) International application number: PCT/CN2024/074281
(87) International publication number: WO 2024/160152

(57) **Abstract**

The disclosure provides a method, an apparatus, a device, and a storage medium for video processing. The method includes: first, in response to a predetermined trigger operation acting on a playback page of a first video, obtaining a recommended video stream corresponding to the first video; then, pulling out and switching to display a recommended video playback page from a predetermined page position on the playback page of the first video and playing a first recommended video in the recommended video stream on the recommended video playback page. It can be seen that the embodiments of the disclosure can smoothly switch to display the recommended video playback page from the playback page of the first video, realizing the effect of switching from the video stream to which the first video belongs to the recommended video stream, and playing the first recommended video in the recommended video stream. Therefore, a playing skip path is shortened for a user to enter a related recommended video from a currently played video, video-based interaction functions are enriched, and the video playing experience of the user is improved.

## Description

This application claims priority to Chinese Patent Application No. 202310116029.5, filed on February 01, 2023, and entitled "METHOD, APPARATUS, DEVICE AND STORAGE MEDIUM FOR VIDEO PROCESSING", the disclosure of which is incorporated herein by reference in its entirety.

### FIELD

The present disclosure relates to the field of data processing, and in particular, to a method, an apparatus and a device, and a storage medium for video processing.

### BACKGROUND

With the continuous development of video processing technology, video-related function requirements of people get increasingly diversified. Therefore, how to enrich video-related functions and satisfy more requirements of users to improve the user experience is a technical problem to be solved urgently at present.

### SUMMARY

In order to solve the foregoing technical problems, the present disclosure provides a method, an apparatus, a device, and a storage medium for video processing, which can enrich video-based interaction functions and improve the user experience.

In a first aspect, the present disclosure provides a method of video processing, including: in response to a predetermined trigger operation acting on a playback page of a first video, obtaining a recommended video stream corresponding to the first video; and pulling out and switching to display a recommended video playback page from a predetermined page position on the playback page of the first video, and playing a first recommended video in the recommended video stream on the recommended video playback page.

In an optional implementation, the method further includes: before pulling out and switching to display the recommended video playback page from the predetermined page position on the playback page of the first video, displaying a partial cover of the first recommended video in the recommended video stream corresponding to the first video in a bottom area of the playback page of the first video.

In an optional implementation, in response to the predetermined trigger operation acting on the playback page of the first video, obtaining the recommended video stream corresponding to the first video includes: in response to a predetermined swipe operation acting in a predetermined trigger area on the playback page of the first video, obtaining the first recommended video corresponding to the first video; wherein trigger prompt information for the predetermined trigger area is presented on the playback page.

In an optional implementation, the method further includes: before in response to the predetermined swipe operation acting in the predetermined trigger area on the playback page of the first video, obtaining the recommended video stream corresponding to the first video, in response to a predetermined swipe operation acting in a video heading area on the playback page of the first video, displaying trigger prompt information for the predetermined trigger area on the playback page of the first video.

In an optional implementation, the method further includes: after playing the first recommended video in the recommended video stream on the recommended video playback page, in response to a video switching operation triggered for the first recommended video on the recommended video playback page, determining a target switching video based on the recommended video stream; and switching to play the target switching video from the first recommended video on the recommended video playback page.

In an optional implementation, the method further includes: in response to a predetermined return operation acting on the recommended video playback page, jumping from the recommended video playback page to the playback page of the first video.

In an optional implementation, in response to the predetermined return operation acting on the recommended video playback page, jumping from the recommended video playback page to the playback page of the first video includes: in response to a trigger operation on a predetermined return control on the recommended video playback page, jumping from the recommended video playback page to the playback page of the first video.

In a second aspect, the present disclosure provides an apparatus for video processing, including: an obtaining module, configured to in response to a predetermined trigger operation acting on a playback page of a first video, obtain a recommended video stream corresponding to the first video; and a first displaying module, configured to pull out and switch to display a recommended video playback page from a predetermined page position of the first video, and play a first recommended video in the recommended video stream on the recommended video playback page.

In a third aspect, the present disclosure provides a computer-readable storage medium, storing instructions thereon, wherein the instructions, when running on a terminal device, cause the terminal device to implement the foregoing method.

In a fourth aspect, the present disclosure provides a device for video processing, including: a memory, a processor, and a computer program stored on the memory and runnable on the processor, wherein the computer program, when executed by the processor, implements the foregoing method.

In a fifth aspect, the present disclosure provides a computer program product, including a computer program/instruction which, when executed by a processor, implements the foregoing method.

The technical solution provided by the embodiments of the present disclosure has at least the following advantages over the prior art:

In an apparatus for video processing provided in the embodiments of the present disclosure, first, a recommended video stream corresponding to a first video is obtained in response to a predetermined trigger operation acting on a playback page of the first video; then, a recommended video playback page is pulled out from a predetermined page position on the playback page of the first video and switched to be displayed, and a first recommended video in the recommended video stream is played on the recommended playback page. It can be seen that the embodiments of the present disclosure can smoothly switch to display the recommended video playback page from the playback page of the first video during a process of playing the first video, realizing the effect of switching from the video stream to which the first video belongs to the recommended video stream, and playing the first recommended video in the recommended video stream. Therefore, a playing skip path is shortened for a user to enter a related recommended video from a currently played video, video-based interaction functions are enriched, and the video playing experience of the user is improved.

### BRIEF DESCRIPTION OF THE DRAWINGS

The accompanying drawings, which are incorporated herein and form a part of this specification, illustrate embodiments consistent with the present disclosure and serve to explain the principles of the disclosure together with the specification.

To illustrate the technical solutions in the embodiments of the present disclosure or in the traditional scheme more clearly, a brief introduction is presented below to the accompanying drawings required for describing the embodiments or the traditional scheme. Apparently, those of ordinary skill in the art may further derive other drawings from these accompanying drawings without creative efforts.
FIG. 1 is a flowchart of a method of video processing according to an embodiment of the present disclosure;
FIG. 2 is a schematic diagram of a playback page according to an embodiment of the present disclosure;
FIG. 3 is a schematic diagram of a video recommendation page according to an embodiment of the present disclosure;
FIG. 4 is a schematic diagram of another playback page according to an embodiment of the present disclosure;
FIG. 5 is a schematic diagram of another playback page according to an embodiment of the present disclosure;
FIG. 6 is a schematic diagram of another playback page according to an embodiment of the present disclosure;
FIG. 7 is a schematic structural diagram of an apparatus for video processing according to an embodiment of the present disclosure; and
FIG. 8 is a schematic structural diagram of a device for video processing according to an embodiment of the present disclosure.

### DETAILED DESCRIPTION

In order to more clearly understand the foregoing objects, features and advantages of the present disclosure, the solutions of the present disclosure will be further described below. It should be noted that the embodiments of the present disclosure and the features of the embodiments can be combined with each other without conflict.

Many specific details are set forth in the following description to provide a thorough understanding of the disclosure. However, the present disclosure may further be implemented otherwise than as described herein. Apparently, the embodiments in the specification are only a part rather than all of the embodiments of the present disclosure.

With the continuous development of video processing technology, video-related function requirements of people get increasingly diversified. Therefore, how to enrich video-related functions and satisfy more requirements of users to improve the user experience is a technical problem to be solved urgently at present.

To this end, the present disclosure provides a method of video processing. The method includes: first, in response to a predetermined trigger operation acting on a playback page of a first video, obtaining a recommended video stream corresponding to the first video; then, pulling out and switching to display a recommended video playback page from a predetermined page position on the playback page of the first video and playing a first recommended video in the recommended video stream on the recommended video playback page. It can be seen that the embodiments of the present disclosure can smoothly switch to display the recommended video playback page from the playback page of the first video, realizing the effect of switching from the video stream to which the first video belongs to the recommended video stream, and playing the first recommended video in the recommended video stream. Therefore, a playing skip path is shortened for a user to enter a related recommended video from a currently played video, video-based interaction functions are enriched, and the video playing experience of the user is improved.

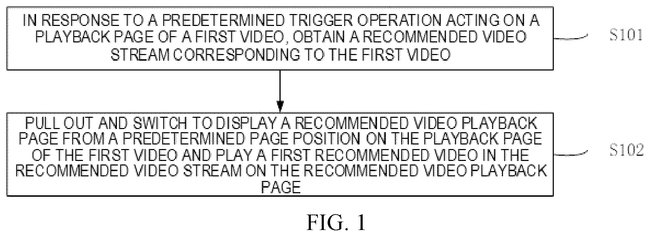

Based thereon, an embodiment of the present disclosure provides a method of video processing. FIG. 1 is a flowchart of a method of video processing according to an embodiment of the present disclosure. The method includes:

S101: in response to a predetermined trigger operation acting on a playback page of a first video, obtain a recommended video stream corresponding to the first video.

The method of video processing provided in the embodiment of the present disclosure may be applied to a client. For example, the client may include a client deployed in a smartphone, a client deployed in a tablet computer, and the like.

In embodiments of the present disclosure, the first video may be any video, and specifically, the first video may be any video in any video stream.

In embodiments of the present disclosure, the recommended video stream may be determined based on the first video, for example, the recommended video stream may include a plurality of recommended videos that belong to the same subject content as the first video.

In an optional implementation, the recommended video stream determined based on the first video may include a predetermined number of recommended videos, wherein the recommended video may be a video determined from a video resource of the server based on a tag feature of the first video. For example, assuming that a tag of the first video includes "tourist", the recommended video may be a video including a predetermined number of tags "tourist". In this case, a predetermined number of videos may be determined based on the tag of the first video, to form the recommended video stream determined based on the first video.

In an optional implementation, the recommended video may further be a hot video related to the first video. For example, if the video content of the first video is a pet video, the recommended video may include a predetermined number of pet-related videos with a higher playing popularity in a predetermined period of time, which form the recommended video stream determined based on the first video.

In embodiments of the present disclosure, the predetermined trigger operation acting on the playback page of the first video may include a trigger operation acting in a predetermined trigger area on the playback page, such as a predetermined swipe operation, wherein the predetermined trigger area may be, for example, a heading area, and the trigger operation acting in the predetermined trigger area on the playback page may be, for example, an upward swipe operation acting in the heading area.

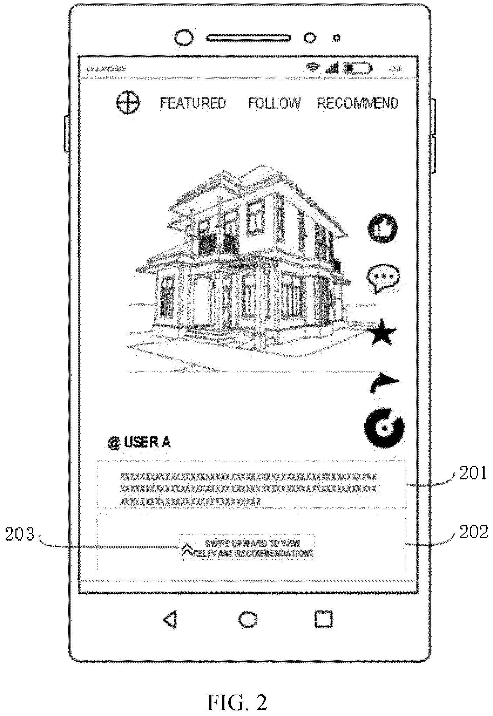

As shown FIG. 2, FIG. 2 is a schematic diagram of a playback page according to an embodiment of the present disclosure. When an upward swipe operation acting in a heading area 201 is received, a recommended video stream corresponding to the first video is obtained.

S102: pull out and switch to display a recommended video playback page from a predetermined page position on the playback page of the first video and play a first recommended video in the recommended video stream on the recommended video playback page.

In embodiments of the present disclosure, when the predetermined trigger operation acting on the playback page of the first video is received, the recommended video playback page is pulled out from the predetermined page position on the playback page of the first video, and the display is switched thereto, so that the display effect of switching smoothly from the playback page of the first video to the recommended video playback page is achieved.

In embodiments of the present disclosure, the predetermined page position on the playback page of the first video may include a predetermined bottom position, top position, left position, right position, or the like on the playback page of the first video.

In embodiments of the present disclosure, after switching from the playback page of the first video to the recommended video playback page, the first recommended video in the recommended video stream corresponding to the first video is played on the recommended video playback page.

The first recommended video may be any recommended video in the recommended video stream corresponding to the first video. It should be noted that the first recommended video is different from the first video, and the recommended video stream to which the first recommended video belongs is also different from the video stream to which the first video belongs, which belong to two independent video streams. Therefore, when the predetermined trigger operation acting on the playback page of the first video is received, by switching from the first video to the playing of the first recommended video, convenient switching and playing of videos in two different video streams are realized.

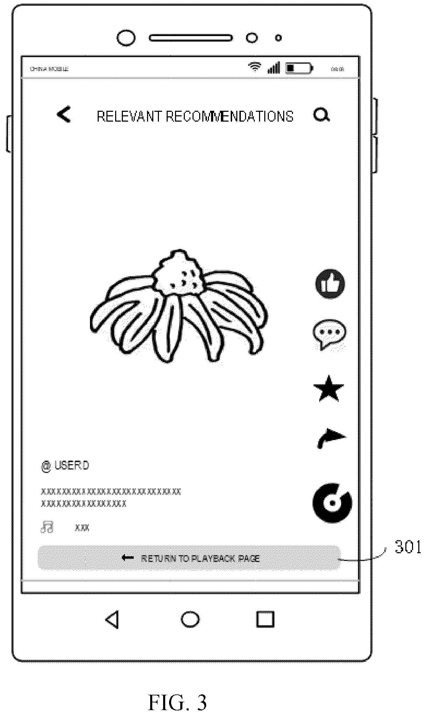

For example, as shown in FIG. 2, when a predetermined trigger operation acting on the playback page of the first video is received, a recommended video stream corresponding to the first video is obtained first. Then, the recommended video playback page shown in FIG. 3 is pulled out from a predetermined page position on the playback page shown in FIG. 2 and switched to be displayed. FIG. 3 is a schematic diagram of a recommended video playback page according to an embodiment of the present disclosure, and a first recommended video in the recommended video stream is played on the recommended video playback page.

In an optional implementation, in order to fulfill the user's expectation on a function of pulling out from the playback page of the first video and switching to display a recommended video playback page, a partial cover of the first recommended video in the recommended video stream corresponding to the first video may further be displayed in a bottom area of the playback page of the first video.

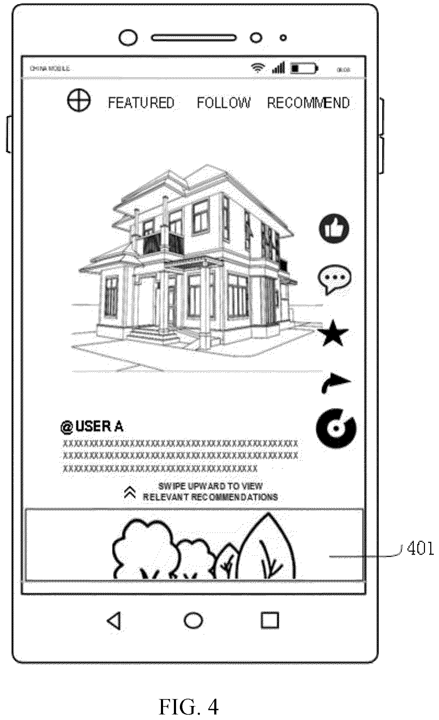

As shown in FIG. 4, FIG. 4 is a schematic diagram of another playback page according to an embodiment of the present disclosure. A partial cover 401 of a first recommended video in a recommended video stream corresponding to the first video is displayed in a bottom area of a playback page of the first video. When a predetermined trigger operation acting on the playback page of the first video is received, a recommended video playback page is pulled out from a predetermined page position on the playback page of the first video and switched to be displayed, and the first recommended video in the recommended video stream is played on the recommended video playback page.

In the method of video processing provided in embodiments of the present disclosure, first, in response to a predetermined trigger operation acting on a playback page of a first video, obtaining a recommended video stream corresponding to the first video; then, pulling out and switching to display a recommended video playback page from a predetermined page position on the playback page of the first video and playing a first recommended video in the recommended video stream on the recommended video playback page. It can be seen that the embodiments of the present disclosure can smoothly switch to display the recommended video playback page from the playback page of the first video, realizing the effect of switching from the video stream to which the first video belongs to the recommended video stream, and playing the first recommended video in the recommended video stream. Therefore, a playing skip path is shortened for a user to enter a related recommended video from a currently played video, video-based interaction functions are enriched, and the video playing experience of the user is improved.

In a practical application, in order to further enrich video-based interaction functions and improve the video playing experience of the user, a recommended video stream corresponding to the first video may further be obtained through a predetermined swipe operation within a predetermined trigger area on the playback page of the first video, and a first recommended video in the recommended video stream is played.

In embodiments of the present disclosure, the predetermined trigger area may be disposed in a predetermined lower area of the playback page of the first video, such as an area 202 shown in FIG. 2, and the predetermined swipe operation acting in the predetermined trigger area may include an upward swipe operation.

In the embodiment of the present disclosure, trigger prompt information for the predetermined trigger area may be presented in the predetermined trigger area. As shown in FIG. 2, prompt information "swipe upward to view relevant recommendations" is displayed in the predetermined trigger area 202, which is used for prompting the user to obtain a recommended video stream corresponding to the first video through an upward swipe operation acting in the predetermined trigger area 202, and a function of obtaining a recommended video stream corresponding to the first video and playing the first recommended video in the recommended video stream is achieved.

In an optional implementation, a predetermined interaction control may be disposed on the playback page of the first video. By clicking the predetermined interaction control, a function of obtaining a recommended video stream corresponding to the first video and playing a first recommended video in the recommended video stream may further be achieved. As shown in FIG. 2, when a click operation of the user on a predetermined interaction control 203 is received, a recommended video stream corresponding to the first video is obtained, and a first recommended video in the recommended video stream is played.

In a practical application, since the heading information of some videos is relatively long, if all the heading information of the video is presented on the playback page, the user experience of watching the video will be affected. Therefore, when presenting the heading information on the playback page of the first video, part of the heading information of the first video can be presented in a video heading area on the playback page, so as to reduce the influence on the user watching the video.

In embodiments of the present disclosure, assuming that the first video is a video with relatively long heading information as described above, when a predetermined trigger operation acting in a video heading area on the playback page of the first video is received, first, all heading information of the first video is displayed on the playback page of the first video, wherein the predetermined trigger operation acting in the video heading area may include a click operation in the video heading area.

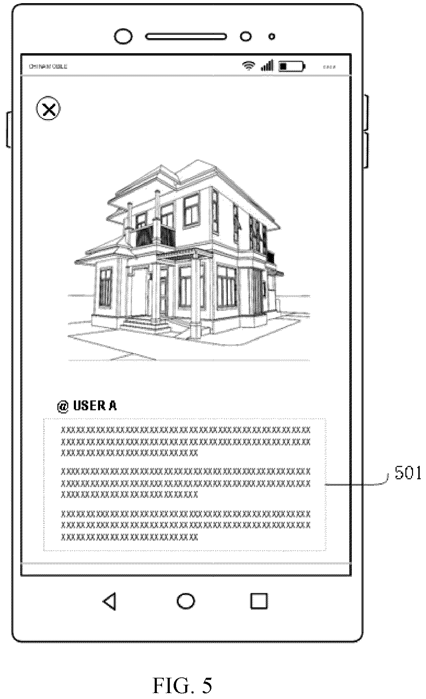

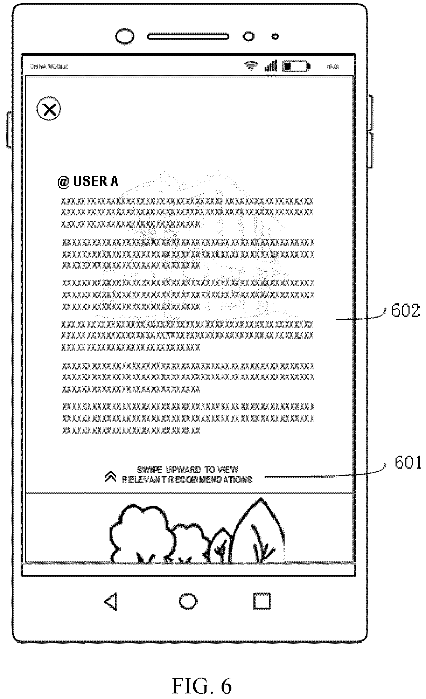

As shown in FIG. 5, FIG. 5 is a schematic diagram of another playback page according to an embodiment of the present disclosure. When a click operation acting in a video heading area 501 is received, all heading information of the first video is displayed on a playback page shown in FIG. 6. FIG. 6 is a schematic diagram of another playback page according to an embodiment of the present disclosure.

In an optional implementation, for a playback page of the first video displaying all the heading information, upon receiving an upward swipe operation acting in the video heading area on the playback page of the first video, first, trigger prompt information for a predetermined trigger area may be displayed on the playback page of the first video, for prompting the user to obtain a recommended video stream corresponding to the first video through a predetermined swipe operation acting in the predetermined trigger area, and a first recommended video in the recommended video stream is played.

For example, as shown in FIG. 5, upon receiving a predetermined trigger operation acting in the video heading area 501, trigger prompt information 601 for the predetermined trigger area is displayed on a playback page shown in FIG. 6; upon receiving a predetermined swipe operation acting in a predetermined trigger area 602 on the playback page shown in FIG. 6, a recommended video stream corresponding to the first video is obtained, and a first recommended video in the recommended video stream is played.

In embodiments of the present disclosure, for the first video which is a video with relatively long heading information, all heading information about the first video is displayed on a playback page of the first video through a predetermined swipe operation acting in a video heading area on the playback page of the first video, and trigger prompt information for the predetermined trigger area is displayed. Then, upon receiving a swipe operation of the user acting in the predetermined trigger area on the playback page of the first video, a recommended video stream is obtained, and a first recommended video in the recommended video stream is played, thereby further enriching video-based interaction functions and improving the video playing experience of the user.

In a practical application, in order to further enrich the video-based interaction function and improve the video playing experience of the user, a mask page may further be displayed on the playback page of the first video, and correspondingly, the predetermined trigger operation acting on the playback page of the first vide may be a trigger operation acting on the mask page for achieving the function of obtaining a recommended video stream corresponding to the first video and playing a first recommended video in the recommended video stream.

Specifically, upon receiving a click operation acting in a heading area on the playback page of the first video, a mask page is displayed on the playback page of the first video, and further a recommended video stream corresponding to the first video is obtained through a trigger operation acting on the mask page, and a first recommended video in the recommended video stream is played.

In embodiments of the present disclosure, the trigger operation acting on the mask page may include an upward swipe operation acting on the mask page.

In an optional implementation, the recommended video stream corresponding to the first video may further be obtained through a predetermined swipe operation acting in a predetermined trigger area on the mask page, the recommended video playback page is pulled up from the bottom of the mask page and displayed, and the first recommended video in the recommended video stream is played on the video playback page.

In embodiments of the present disclosure, the predetermined trigger area may be disposed in a predetermined lower area of the mask page, and the predetermined swipe operation acting in the predetermined trigger area may include an upward swipe operation and the like.

In embodiments of the present disclosure, trigger prompt information for the predetermined trigger area may be presented in the predetermined trigger area on the mask page. For example, prompt text "swipe upward to view relevant recommendations" may be displayed to prompt the user to obtain a recommended video stream corresponding to the first video through an upward swipe operation acting in in the predetermined trigger area on the mask page and play a first recommended video in the recommended video stream.

In an optional implementation, a predetermined interaction control may be disposed at a predetermined bottom position of the mask page, and a function of obtaining a recommended video stream corresponding to the first video and playing a first recommended video in the recommended video stream may also be realized by clicking the predetermined interaction control.

In a practical application, heading information of the first video may further be displayed on the mask page. Since the heading information of some videos is relatively long, if all the headings of the video are displayed on the mask page, the user experience of watching the video is affected. Therefore, when presenting the heading information of the first video on the mask page, partial heading information of the first video may be presented in a video heading area on the mask page, so as to reduce the user experience of watching the video.

In embodiments of the present disclosure, when presenting partial heading information of the first video on the mask page, all the heading information of the first video is displayed on the mask page in response to a predetermined swipe operation acting in the video heading area on the mask page. The predetermined swipe operation acting in the video heading area on the mask page may include an upward swipe operation and the like.

In an optional implementation, in response to the predetermined swipe operation acting in the video heading area on the mask page, trigger prompt information for the predetermined trigger area may further be displayed on the mask page, so as to prompt the user to obtain, through the predetermined swipe operation acting in the predetermined trigger area, a recommended video stream corresponding to the first video and play a first recommended video in the recommended video stream.

In embodiments of the present disclosure, a mask page may be displayed on the playback page of the first video. Through a trigger operation acting on the mask page, a function of obtaining a recommended video stream corresponding to the first video and playing a first recommended video in the recommended video stream is realized, thereby further enriching video-based interaction functions and improving the video playing experience of the user.

In a practical application, during the process of playing the first recommended video in the recommended video stream on the recommended video playback page, the user may further switch the playing of the recommended video on the recommended video playback page through a video switching operation, thereby further enriching video-based interaction functions and improving the video playing experience of the user.

Specifically, upon receiving a video switching operation triggered for the first recommended video acting on the recommended video playback page, first, a target switching video is determined based on the recommended video stream, and then, on the recommended video playing page, the first recommended video is switched to playing of the target switching video.

In embodiments of the present disclosure, the first recommended video played on the recommended video playback page may be any of recommended videos in the recommended video stream which are determined by the server based on the first video and sent to the client.

In embodiments of the present disclosure, the video switching operation triggered for the first recommended video may include an upward swipe operation, a downward swipe operation and the like acting on the recommended video playback page, for realizing the function of switching the playing of the recommended video.

In embodiments of the present disclosure, upon receiving a video switching operation triggered for the first recommended video, first, based on a recommended video stream to which the first recommended video belongs, a target switching video is determined, that is, a previous or next video adjacent to the first recommended video in the recommended video stream is determined as a target switching video based on a user-triggered upward or downward swipe operation. Then, the first recommended video is switched to playing of the target switching video, on the recommended video playback page.

In an optional implementation, upon receiving a video switching operation triggered for the first recommended video, if it is determined that the first recommended video is the last recommended video in the recommended video stream, the user may be prompted that no more recommended videos exist, and the user is prompted to return to the video playback page of the first video.

In another optional implementation, during the process of playing the recommended video in the recommended video stream, if the user wants to exit the recommended video playback page, the recommended video playback page may jump to the playback page of the first video through a predetermined return operation acting on the recommended video playback page.

In embodiments of the present disclosure, the predetermined return operation acting on the recommended video playback page may include a leftward swipe operation acting on the recommended video playback page, etc., for realizing the function of jumping from the recommended video playback page to the playback page of the first video.

In addition, a predetermined return control may be presented at a predetermined bottom position on the recommended video playback page; accordingly, a predetermined return operation acting on the recommended video playback page may include a trigger operation for the predetermined return control, wherein the trigger operation for the predetermined return control may include a click operation acting on the control, etc.

In a practical application, the predetermined return control may further display prompt text "return to XX", to prompt the user that a function of jumping from the recommended video playback page to the playback page of the first video may be realized through a trigger operation on the control.

For example, in the process of playing the recommended video on the recommended video playback page as shown in FIG. 3, through a video switching operation triggered for the first recommended video and acting on the recommended video playback page, the first recommended video being played currently is switched to play a target switching video. In the process of playing the target switching video on the recommended video playback page, the recommended video playback page shown in FIG. 3 may further jump to the playback page of the first video as shown in FIG. 2 through a trigger operation on the predetermined return control 301.

In embodiments of the present disclosure, the function of switching the playing of respective recommended videos in the recommended video stream can be realized on the recommended video playback page, based on the recommended video stream where the first recommended video is located. In addition, in the embodiment of the present disclosure, the recommended video playback page jumps to the playback page of the first video through a predetermined return operation acting on the recommended video playback page, thereby further enriching video-based interaction functions and improving the user experience.

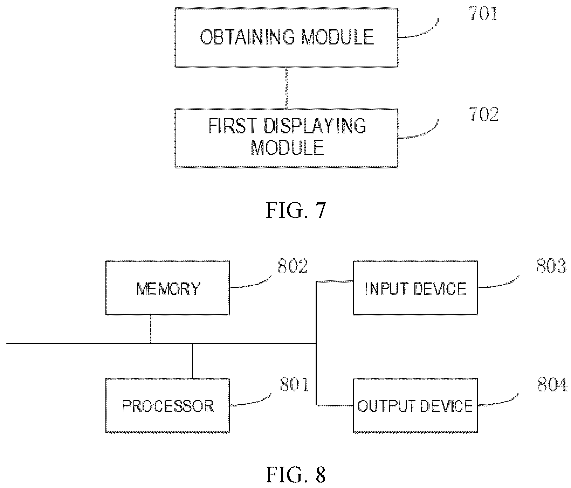

Based on the foregoing method embodiments, the present disclosure further provides an apparatus for video processing. Referring to FIG. 7, FIG. 7 is a schematic structural diagram of an apparatus for video processing according to an embodiment of the present disclosure. The apparatus includes: an obtaining module 701, configured to in response to a predetermined trigger operation acting on a playback page of a first video, obtain a recommended video stream corresponding to the first video; and a first displaying module 702, configured to pull out and switch to display a recommended video playback page from a predetermined page position on the playback page of the first video, and play a first recommended video in the recommended video stream on the recommended video playback page.

**In** an optional implementation, the apparatus further includes: a second displaying module configured to display a partial cover of the first recommended video in the recommended video stream corresponding to the first video in a bottom area of the playback page of the first video.

**In** an optional implementation, the obtaining module includes: an obtaining sub-module configured to in response to a predetermined swipe operation acting in a predetermined trigger area on the playback page of the first video, obtain the recommended video stream corresponding to the first video; wherein trigger prompt information for the predetermined trigger area is presented on the playback page.

In an optional implementation, the obtaining module further includes: a displaying sub-module configured to in response to a predetermined swipe operation acting in a video heading area on the playback page of the first video, display trigger prompt information for the predetermined trigger area on the playback page of the first video.

In an optional implementation, the apparatus further includes: a determining module configured to in response to a video switching operation triggered for the first recommended video on the recommended video playback page, determine a target switching video based on the recommended video stream; and a switching and playing module configured to switch to play the target switching video from the first recommended video on the recommended video playback page.

In an optional implementation, the apparatus further includes: a jumping module configured to in response to a predetermined return operation acting on the recommended video playback page, jump from the recommended video playback page to the playback page of the first video.

In an optional implementation, the jumping module includes: a jumping sub-module configured to in response to a trigger operation on a predetermined return control on the recommended video playback page, jump from the recommended video playback page to the playback page of the first video.

In the apparatus for video processing provided in embodiments of the present disclosure, first, a recommended video stream corresponding to a first video is obtained in response to a predetermined trigger operation acting on a playback page of the first video; then, a recommended video playback page is pulled out from a predetermined page position on the playback page of the first video and switched to be displayed, and a first recommended video in the recommended video stream is played on the recommended playback page. It can be seen that the embodiments of the present disclosure can smoothly switch to display the recommended video playback page from the playback page of the first video, realizing the effect of switching from the video stream to which the first video belongs to the recommended video stream, and playing the first recommended video in the recommended video stream. Therefore, a playing skip path is shortened for a user to enter a related recommended video from a currently played video, video-based interaction functions are enriched, and the video playing experience of the user is improved.

In addition to the above-described method and apparatus, an embodiment of the present disclosure further provides a computer-readable storage medium. The computer-readable storage medium stores instructions which, when running on a terminal device, cause the terminal device to implement the method of video processing of the embodiments of the present disclosure.

An embodiment of the present disclosure further provides a computer program product. The computer program product includes a computer program/instruction which, when executed by a processor, implements the method of video processing of the embodiments of the present disclosure.

In addition, an embodiment of the present disclosure further provides a device for video processing. Referring to FIG. 8, the device for video processing may include: a processor 801, a memory 802, an input device 803, and an output device 804. There may be one or more processors 801 in the device for video processing. In FIG. 8, one processor is used as an example. In some embodiments of the present disclosure, the processor 801, the memory 802, the input device 803, and the output device 804 may be connected via a bus or in another manner, wherein the connection via a bus is taken as an example in FIG. 8.

The memory 802 may be configured to store a software program and a module, and the processor 801 executes various function applications and data processing of the device for video processing by running the software program and the module stored in the memory 802. The memory 802 may mainly include a program storage area and a data storage area, wherein the program storage area may store an operating system, an application program required by at least one function, etc. In addition, the memory 802 may include a high-speed random-access memory, and may further include a non-volatile memory, for example, at least one magnetic disk storage device, a flash memory device, or other volatile solid-state storage device. The input device 803 may be configured to receive input digital or character information and generate signal inputs related to user settings and function controls of the device for video processing.

Specifically, in this embodiment, the processor 801 loads an executable file corresponding to the process of one or more application programs into the memory 802 according to the following instruction, and the processor 801 runs the application programs stored in the memory 802, thereby implementing various functions of the foregoing device for video processing.

It should be noted that, as used herein, relational terms such as "first" and "second" are merely used to distinguish one entity or operation from another entity or operation, and do not necessarily require or imply any actual relationship or sequence between these entities or operations. Furthermore, the terms "comprise", "include" or any other variant thereof are intended to cover a non-exclusive inclusion, so that a process, a method, an article, or a device that includes a series of elements not only includes those elements, but also includes other elements that are not explicitly listed, or further includes elements inherent to the process, the method, the article, or the device. An element limited by "including a ..." does not exclude other same elements existing in a process, a method, an article, or a device that includes the element, unless otherwise specified.

The foregoing descriptions are merely specific implementations of the present disclosure, so that those skilled in the art can understand or implement the present disclosure. Various modifications to these embodiments will be readily apparent to those skilled in the art, and the general principles defined herein may be implemented in other embodiments without departing from the spirit or scope of the present disclosure. Therefore, the present disclosure will not be limited to the embodiments described herein but is to be in accord with the widest scope consistent with the principles and novel features disclosed herein.

## Claims

1. A method of video processing, comprising:
in response to a predetermined trigger operation acting on a playback page of a first video, obtaining a recommended video stream corresponding to the first video; and
pulling out and switching to display a recommended video playback page from a predetermined page position on the playback page of the first video and playing a first recommended video in the recommended video stream on the recommended video playback page.

2. The method of claim 1, further comprising:
before pulling out and switching to display the recommended video playback page from the predetermined page position on the playback page of the first video,
displaying a partial cover of the first recommended video in the recommended video stream corresponding to the first video in a bottom area of the playback page of the first video.

3. The method of claim 1, wherein in response to the predetermined trigger operation acting on the playback page of the first video, obtaining the recommended video stream corresponding to the first video comprises:
in response to a predetermined swipe operation acting in a predetermined trigger area on the playback page of the first video, obtaining the recommended video stream corresponding to the first video; wherein trigger prompt information for the predetermined trigger area is presented on the playback page.

4. The method of claim 3, further comprising:
before in response to the predetermined swipe operation acting in the predetermined trigger area on the playback page of the first video, obtaining the recommended video stream corresponding to the first video,
in response to a predetermined swipe operation acting in a video heading area on the playback page of the first video, displaying trigger prompt information for the predetermined trigger area on the playback page of the first video.

5. The method of claim **1,** further comprising:
after playing the first recommended video in the recommended video stream on the recommended video playback page,
in response to a video switching operation triggered for the first recommended video on the recommended video playback page, determining a target switching video based on the recommended video stream; and
switching to play the target switching video from the first recommended video on the recommended video playback page.

6. The method of claim 1, further comprising:
in response to a predetermined return operation acting on the recommended video playback page, jumping from the recommended video playback page to the playback page of the first video.

7. The method of claim 6, wherein in response to the predetermined return operation acting on the recommended video playback page, jumping from the recommended video playback page to the playback page of the first video comprises:
in response to a trigger operation on a predetermined return control on the recommended video playback page, jumping from the recommended video playback page to the playback page of the first video.

8. A apparatus for video processing, comprising:
an obtaining module, configured to in response to a predetermined trigger operation acting on a playback page of a first video, obtain a recommended video stream corresponding to the first video; and
a first displaying module, configured to pull out and switch to display a recommended video playback page from a predetermined page position on the playback page of the first video, and play a first recommended video in the recommended video stream on the recommended video playback page.

9. A computer-readable storage medium, wherein the computer-readable storage medium stores instructions thereon which, when running on a terminal device, cause the terminal device to implement the method of any of claims 1 to 7.

10. A device for video processing, comprising: a memory, a processor, and a computer program stored on the memory and runnable on the processor, wherein the computer program, when executed by the processor, implements the method of any of claims 1 to 7.
